# EUROPEAN PATENT APPLICATION

(11) **EP 1 686 490 A2**
(43) Date of publication of application: **02.08.2006**
(21) Application number: 06250522.7
(22) Date of filing: 31.01.2006
(51) Int. Cl.: G06F 17/22

(54) **Document processing apparatus and method and document processing system**

(30) Priority: 01.02.2005 JP 2005025503; 25.01.2006 JP 2006016049
(71) Applicant: CANON KABUSHIKI KAISHA, Ohta-ku, Tokyo (JP)
(72) Inventor: Kikuchi, Koji, Ohta-ku, Tokyo (JP)
(74) Representative: Beresford, Keith Denis Lewis

(57) **Abstract**

In a conventional system in which a structured document is uploaded, and a server performs layer management by dividing the structured document into page units, the user must designate a layer management instruction or must prepare for another batch designation file after uploading. In a document processing system according to this invention, the user assigns three layer attributes "upper", "lower", and "equal" to arbitrary pages of a structured document as annotations in advance before uploading, and a server automatically reads layer instructions of the annotations upon uploading and performs layer management according to the contents of the instructions.

## Description

### FIELD OF THE INVENTION

The present invention relates to a document processing apparatus and method, and a document processing system, which handle layered, structured documents and, more particularly, to an apparatus, method, and system, which manage non-layered document data as document data to which a structure is given in accordance with instruction information embedded in the document data.

### BACKGROUND OF THE INVENTION

In recent years, electronic catalogs managed by a Web server by uploading files (document files) of electronic data of documents as sources of electronic catalogs are known. Furthermore, a technique for managing electronic catalogs by applying layered structure edit processing to the electronic catalogs in accordance with instructions using a GUI and the like from the client after uploading has been implemented (see Japanese Patent Laid-Open Nos. 11-161673 and 2003-330967).

On the other hand, some electronic document data can record annotations as their part like documents of the PDF (Portable Document Format) format. Note that this annotation is information which is displayed together with a document upon editing the document, but only the document is printed and the annotation is not printed in a normal print mode. A technique that utilizes this annotation as print information is available (see Japanese Patent Laid-Open Nos. 7-168838 and 2004-118509).

When the above prior arts are used, each client uploads an electronic file of a structured document as a source of an electronic catalog to a Web server, and the server side holds that electronic catalog as page components. The user must apply layered structure edit processing to the uploaded structured document file by instructions at a GUI and the like from the client. Operations for the layered structure edit processing become complicated when the number of layers and the number of pages are large. Such problem causes productivity drop. A delay from when the electronic file of the structured document as a source of a catalog is uploaded until such electronic file is provided as an electronic catalog to the client is large, thus lowering the use efficiency of the server. Furthermore, since the user must edit while confirming the contents of respective page components, edit errors may occur, and a catalog with a configuration far from an original catalog configuration may be generated.

### SUMMARY OF THE INVENTION

The present invention has been made in consideration of the aforementioned problems, and has as its object to provide a document processing apparatus and method, and a document processing system, which arbitrarily describe layer information of each page as an annotation that can be described in that page in original document data, and manage the layered structure of respective pages in accordance with the layer information designated by the annotations to have that original document data as input document data.

Generally, structured data having a target record as a leaf node is scanned in a given order, e.g., in a depth-priority order to sort leaf nodes in a scan order, and sequential data in which information indicating the relative depth of the leaf node is appended to the leaf node is generated as input data. It is another object of the present invention to provide a data conversion apparatus which can easily, quickly, and accurately generate structured data by re-configuring that sequential data to a tree structure.

In order to achieve the above objects, the present invention has the following arrangement.

A document processing apparatus for converting input document data having no structure into output document data having a structure, comprises:
layer generation means for selecting one of predetermined constitutional units of the input document data as a target constitutional unit, generating new layer information of the output document data based on layer specification information included in document data of the target constitutional unit, and setting the layer information as a new target layer; and
registration means for registering the target constitutional unit of the input document data as a constitutional unit which belongs to the target layer of the output document data,
wherein the layer generation means and the registration means perform conversion into the output document data while sequentially selecting first to last constitutional units as a target constitutional unit for the input document data.

Alternatively, a data conversion apparatus for converting sequential data in which records are allocated sequentially into structured data in which the records are hierarchically allocated, comprises:
interpretation means for interpreting contents of a predetermined field in a target record of the sequential data; and
registration means for, when the interpretation means interprets that the contents of the predetermined field indicate a layer of the target record, generating a layer indicated by the field, and registering the target record in the structured data as a record which belongs to the generated layer.

Alternatively, a catalog server for providing catalog data with a tree structure in which respective pages are allocated as leaf nodes of the tree structure onto a network, comprises:
interpretation means for selecting each page of input document data in which pages are sequentially allocated as a target page in turn, and interpreting annotation information which can be described for each target page;
generation means for, when the interpretation means interprets that the annotation information is specification information indicating that the target page belongs to a branch node different from a current branch node, generating catalog data by generating a new branch node of a layer specified by the specification information, and registering the target page as a leaf node that belongs to the new branch node; and
means for transmitting all or some of the catalog data generated by the generation means in response to a request from the network.

According to the present invention, data having no layered structure, e.g., a document can be managed as data with a designated structure, e.g., a document. For this reason, data with a desired structure, e.g., a document can be managed and provided, and productivity drop, resource use efficiency drop, and possibility of malpractices due to structuring can be prevented. Since the structure can be designated based on the annotations assigned to a document, an existing data format can be used as data having no layered structure serving as an input. Furthermore, when a format which does not depend on a computer environment is used as the data format having no layered structure, computers having different environments (e.g., different operating systems) can handle data having an identical structure, e.g., a document, as compatible data.

other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a block diagram showing the network configuration of the entire system according to an embodiment of the present invention;
Fig. 2 is a block diagram showing the arrangement of a server PC according to the embodiment of the present invention;
Fig. 3 is explanatory view 1 of an explanation of layer attributes in the embodiment of the present invention;
Fig. 4 is explanatory view 2 of an explanation of layer attributes in the embodiment of the present invention;
Fig. 5 is a view showing an example of catalog data before uploading in the embodiment of the present invention;
Fig. 6 is a view showing an image example after uploading in the embodiment of the present invention;
Figs. 7A and 7B are views showing database registration examples after uploading in the embodiment of the present invention;
Fig. 8 is a flowchart in the embodiment of the present invention; and
Fig. 9 shows an example of an edit application in the first embodiment of the present invention.

### DETAILED DESCRIPTION OF THE PREFERRED EMBODIMENTS

### <System Configuration>

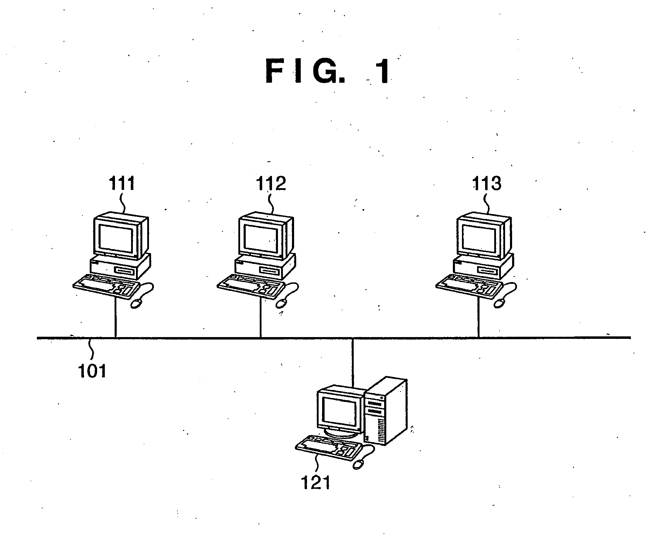

A preferred embodiment of the present invention will be described hereinafter with reference to the accompanying drawings. Fig. 1 is a block diagram showing the network configuration for implementing instructions/operations from a client having a Web browser to a Web server that forms an electronic catalog management system according to the present invention. Referring to Fig. 1, client personal computers (to be referred to as "client PCs" hereinafter) 111, 112, and 113, and an electronic catalog management server PC (to be referred to as a "server PC" hereinafter) 121 are connected to a local area network (LAN) 101. The server PC 121 has a Web server function, and executes processing for receiving requests via Web browsers of the client PCs 111, 112, and 113, and returning requested data to the browser of the client PC corresponding to the request source. At this time, the server PC 121 can execute processing according to a received request by the Web server function, e.g., uploading and downloading of data. Note that a communication protocol between the server and client is not limited to TCP/IP. However, a function of uploading data from the client to the server and a function of downloading server data to the client in response to a request from the client are required. The server PC also has a client function, i.e., a browser, and can also execute instruction processing (e.g., uploading, data reference, downloading, and the like) from the browser of the server 121 to the catalog management system. In this case, this embodiment also calls the client function of the server 121 as a client or client PC. Each of the client PCs 111, 112, and 113 can be a general PC which can be connected to the LAN 101, and has a Web browser and an edit function of assigning an annotation to structured document data. This annotation is desirably meta information which is not the contents of the document data itself, but a part of the document data itself may be used as an annotation.

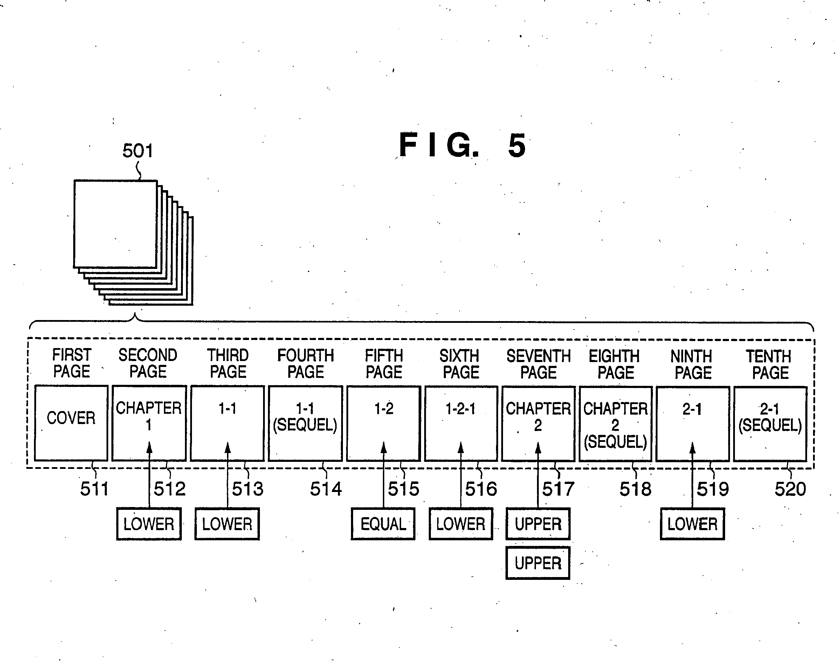

In the electronic catalog management system of this embodiment, the client PC prepares an electronic document which describes layers of folders to which pages belong as annotations of those pages, as exemplified in Fig. 5 to be described later. The client PC uploads the electronic document to the server PC 121. The server PC 121 executes an electronic catalog management program, and converts the uploaded electronic document into a layered structure so that respective pages belong to folders described in the annotations. As a result, the input electronic document is converted into a structured electronic catalog. Furthermore, the server PC 121 provides that structured document data for reference purpose of the client. The client can download a required part in units of pages, folders, or a document of the provided structured document data.

Since this embodiment relates to electronic catalogs, a document to be processed will be explained as an electronic catalog. However, this embodiment is not limited to such electronic catalog, and can be applied to other general electronic document data. In this case, electronic document data which is uploaded from the client and has no structure will be referred to as original electronic document data (an original electronic document file if it is a file), and electronic document data to which the server has given a structure will be referred to as structured electronic document data (a structured electronic document file if it is a file). As the original electronic document data, for example, a PDF file is used. As a page as an element of the structured electronic document file, data extracted from the PDF file for each page is used. A folder (to be described in detail later) as a branch node that defines a structure includes information which indicates its parent folder, and a page that belongs to the folder. The folder may include a folder name to specify the folder itself.

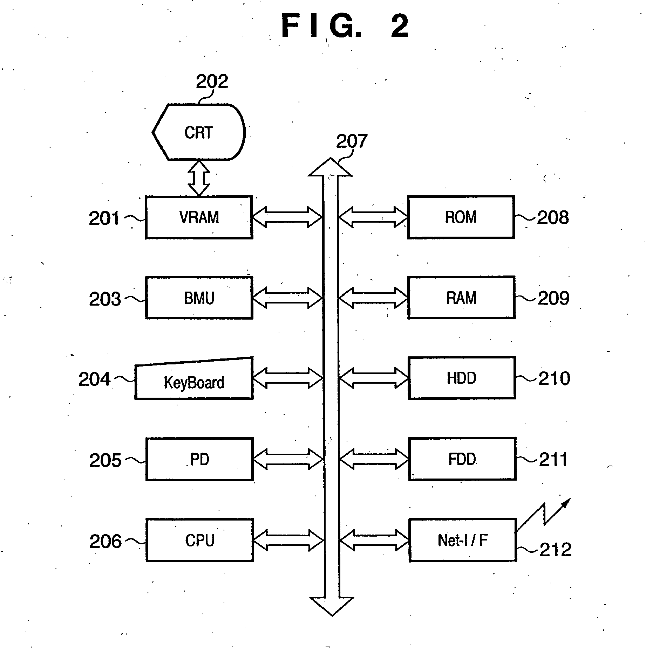

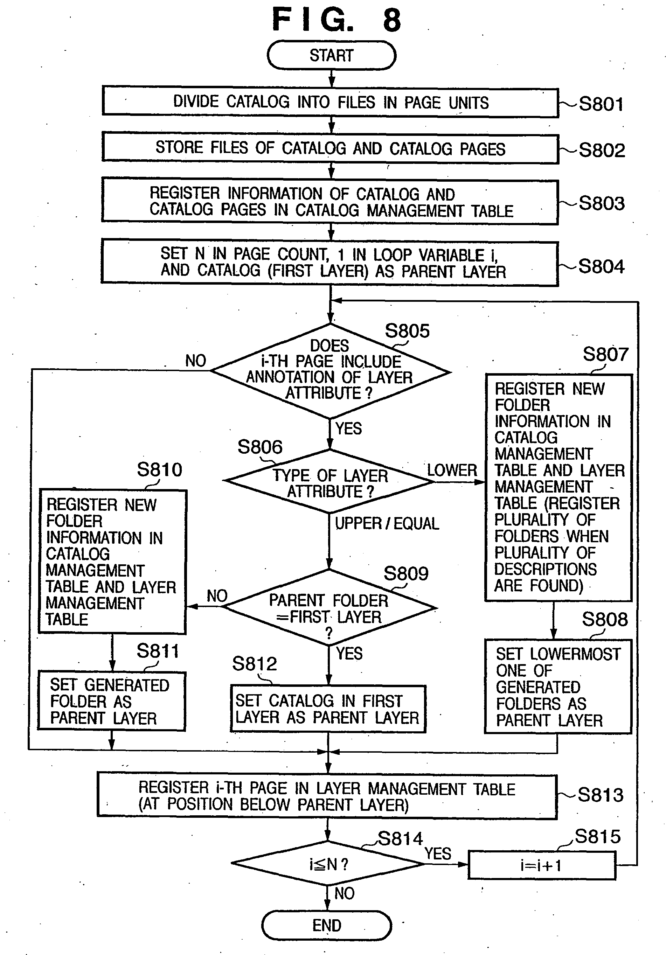

Fig. 2 is a schematic block diagram showing the arrangement of the server PC 121 of this embodiment shown in Fig. 1. Referring to Fig. 2, a video RAM (VRAM) 201 rasterizes and stores characters and images to be displayed on the screen of a CRT display device 202. A bit move unit (BMU) 203 controls data transfer between memories or between the memory and each device. A keyboard 204 comprises various keys associated with inputs. A pointing device (PD) 205 is used to, e.g., point to an arbitrary position on the screen. A CPU 206 executes control programs (including a program according to the present invention, an error processing program, and a program of a sequence to be described later using Fig. 8), which are stored in a ROM 208, so as to control respective units of this apparatus. A RAM 209 is used as a work area used when the CPU 206 executes the aforementioned programs, and a temporary save area upon error processing. An HDD 210 indicates a hard disk drive. An FDD 211 indicates a flexible disk drive. These disks are used to save application programs such as an electronic catalog management program and the like and data, databases, libraries, and the like. Also, these disk devices are used to save uploaded electronic document data files, and structured electronic document data files after conversion. A network interface 212 performs data control and diagnosis on a network so as to perform data transfer with the client PCs 111, 112, and 113 via the network. An I/O bus 207 interconnects the aforementioned units, and includes an address bus, data bus, and control bus. Electronic document data uploaded from the client is saved in, e.g., the HDD 210, and a structured electronic document after conversion is also saved in the HDD 210, and is disclosed to the client.

In the above arrangement, when the power supply of the server PC 121 is turned on, the CPU (206) initializes the apparatus in accordance with a boot program in the ROM (208), loads an OS from the HDD (210), and then controls to run various applications and the like. Since the server PC 121 is based on a general-purpose information processing apparatus (personal computer or the like), the programs are stored in the hard disk or the like. Of course, the programs may be stored in the ROM, and the present invention is not limited by storage media. The client PC has the same basic structure as the server PC 121, but it need not comprise functions unique to the server, for example, the Web server, electronic catalog management program, and the like. In this embodiment, a database that stores data and file management of electronic catalogs are implemented by one server, but they may be implemented using different information processing apparatuses like a database server, file sharing server, and the like.

### <Overview of Processing>

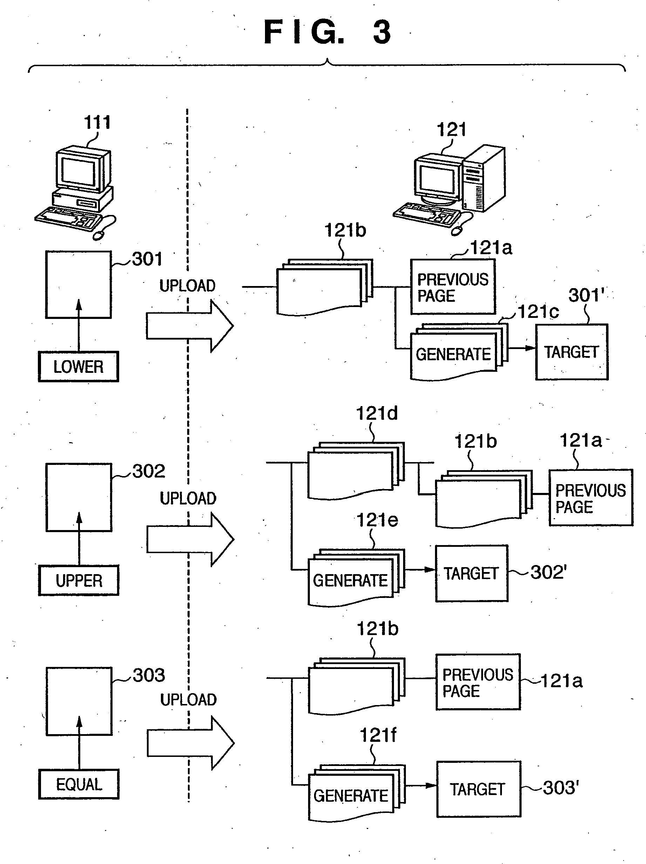

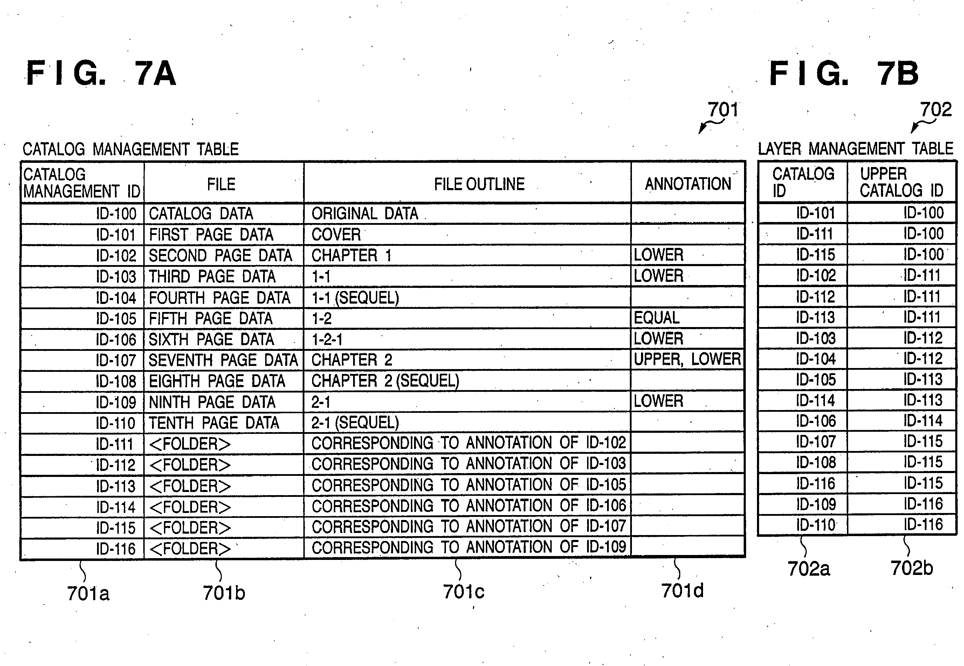

An overview of an embodiment associated with group management of catalog pages in the server to which an electronic catalog as a source (to be referred to as an original electronic catalog hereinafter) is uploaded from the electronic catalog management system, and combining processing of catalog pages (i.e., electronic catalog conversion processing) will be described below using Figs. 3 to 7B. In the description of the overview, assume that structured electronic catalog data has a tree structure. As will be explained using Figs. 7A and 7B, in this embodiment, this tree structure is expressed by defining logical connection relation among nodes by a table. Therefore, in the description of the overview, the structure and management sequence of an electronic catalog will be explained using the drawings that illustrate the tree structure, but actual processing is implemented by table handling.

Fig. 3 shows an example of the types of layer attributes to be assigned.to catalog pages (which are respective pages of the original electronic catalog and serve as constitutional units of the electronic catalog) upon catalog uploading, and the processing contents. The layer attribute is information (i.e., layer information) described in a target catalog page in the original electronic catalog when that catalog page is caused to belong to a folder different from that to which the immediately preceding catalog page belongs in the structured electronic catalog having the tree structure. The layer attribute indicates a relative layer difference to a layer to which the target catalog page belongs in the original electronic catalog with respect to the current target layer in the structured electronic catalog. Note that this embodiment uses the term "folder", which does not necessarily imply a folder in an operating system such as Windows® or the like. The folder of this embodiment corresponds to management information which bundles one or a plurality of catalog pages in the structure of the structured electronic catalog (i.e., structured document data). Therefore, one structured electronic catalog (i.e., one file) can include one or a plurality of folders.

As shown in Fig. 3, the layer attributes include three types, i.e., "lower", "upper", and "equal". The layer attribute is described with reference to a layer of the current target folder (to be also referred to as a target layer hereinafter), i.e., the layer of a folder to which the catalog page converted at the last belongs in the structured electronic catalog. That is, if the layer attribute is "lower", a new folder is generated at a layer position immediately below the target folder as a parent folder, that new folder is defined as a new target folder, and a target page is registered in that new target folder. Note that the degree of "lower" is defined by the number of descriptions of "lower". That is, if one description "lower" is made, a new folder is generated one layer below the target folder, i.e., immediately below it. If two descriptions like "lower, lower" are made, new folders are generated down to positions two layers below the target folder, i.e., immediately below the target layer and further immediately below that layer. The same applies to three or more descriptions. In this manrier, as can be seen from the above description, the layer attribute is relative designation with reference to the target layer.

On the other hand, if the layer attribute is "upper", a new folder is generated immediately above the layer of the target folder, that new folder is defined as a new target folder, and a target page is registered in that new target folder. That is, the layer of the folder to which the target page is to belong is that of the parent folder of the target folder. Herice, a new folder which belongs to a parent folder of the parent folder of the target folder is generated, that new folder is defined as a new target folder, and a target catalog page is registered in that new target folder. The degree of "upper" is indicated by the same method as "lower".

If the layer attribute is "equal", a new folder is generated at an equal layer position to the target layer (at the same layer position), that new folder is defined as a new target folder, and a target catalog page is registered in that new target folder. That is, a new folder which belongs to the parent folder of the target folder is generated, that new folder is defined as a new target folder, and a target catalog page is registered in that new target folder.

Note that a catalog page which includes none of descriptions "upper", "lower", and "equal" as an annotation is registered in a folder of the current target layer (i.e., in the same folder as that of the immediately preceding page) in the structured electronic catalog. When both the descriptions of "upper" and "lower" are included, if the numbers of descriptions are equal to each other, they are processed in the same manner as "equal"; if the numbers of descriptions are different, the same numbers of descriptions of "upper" and "lower" cancel each other, and they are processed according to the remaining descriptions. Of course, this is an example and is an unusual case. Hence, if such descriptions are found, an error or the like may be generated, and any other definitions may be adopted. Also, if the same numbers of descriptions of "upper" and "lower" are included, they may be processed as no description of the layer attribute. The descriptions of "upper", "lower", and "equal" can be similarly processed independently of their formats as long as they are information indicating a relative layer to which the target page belongs. For example, a method of sorting layer attributes using annotation colors, shapes, or the like may be used.

In Fig. 3, the server 121 and client 111 are those of this embodiment shown in Fig. 1. The left side of Fig. 3 shows the data management state of the client 111, and the right side shows that of the server 121. Note that pages assigned annotations (i.e., layer attributes), which are managed by the client 111, indicate those: included in a catalog having a plurality of pages in practice. That is, in the example of Fig. 3, an original electronic catalog managed by the client 111 has at least a page count N of 2 or more.

A catalog page 301 is assigned a layer attribute "lower" as an annotation. If this page 301 is uploaded as a target page, the server 121 executes processing for generating a new folder 121c below a folder (i.e., a target folder) 121b which stores an immediately preceding page 121, and storing the page 301 in the new folder as a new target folder. As a result, the target page 301 belongs to a layer immediately below the immediately preceding page 121a (page 301').

A catalog page 302 is assigned a layer attribute "upper" as an annotation. If this page is uploaded as a target page, the server 121 executes processing for generating a new folder 121e at the same layer position as a folder 121d immediately above the folder (i.e., target folder) 121b that stores the immediately preceding page 121a (i.e., at a position immediately below a parent folder (not shown; or a root) of the folder 121d), and storing the page 302 using the folder 121e as a new target folder. As a result, the target page 302 belongs to a layer immediately above the immediately preceding page 121a.

Likewise, a catalog page 303 is assigned a layer attribute "equal" as an annotation. If this page is uploaded as a target page, the server 121 executes processing for generating a new folder 121f at the same layer position as the folder (i.e., target folder) 121b that stores the immediately preceding page 121a, and storing the page 303 using that folder 121f as a new target folder. As a result, the target page 303 belongs to a different folder which is at the same layer level as that of the immediately preceding page 121a.

As described above, there are three different layer attributes, and each of these layer attributes generates a new folder in the structured electronic catalog, which is selected as a target folder.

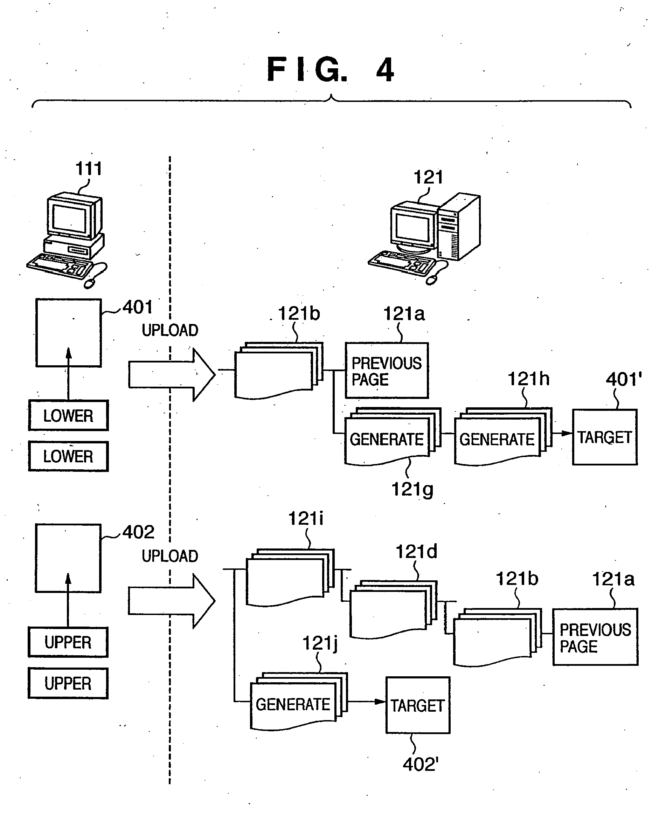

Since a plurality of layer attributes "upper" and "lower" can be designated, Fig. 4 shows an example when such plurality of layer attributes are designated. In this example, as for multiple designations of layer attributes, a plurality of annotations are assigned to each page. Alternatively, two layer attributes may be described in one annotation, or another designation method by means of colors, shapes, and the like may be used. That is, the description method is not particularly limited.

A catalog page 401 is assigned two layer attributes "lower" as annotations. If this page 401 is uploaded, the server 121 executes processing for generating new folders 121g and 121f for two layers below the storage folder (i.e., target folder) 121b of the immediately preceding page 121a to perform layer management, and storing the page 401 using the lowermost newly generated folder 121f as a new target folder.

A catalog page 402 is assigned two layer attributes "upper" as annotations. If this page 402 is uploaded, the server 121 executes processing for generating a new folder 121j at a position two layers above the storage folder (i.e., target folder) 121b of the immediately preceding page 121a, and storing the page 402 using the newly generated folder 121j as a new target folder.

### <Catalog Generation Example>

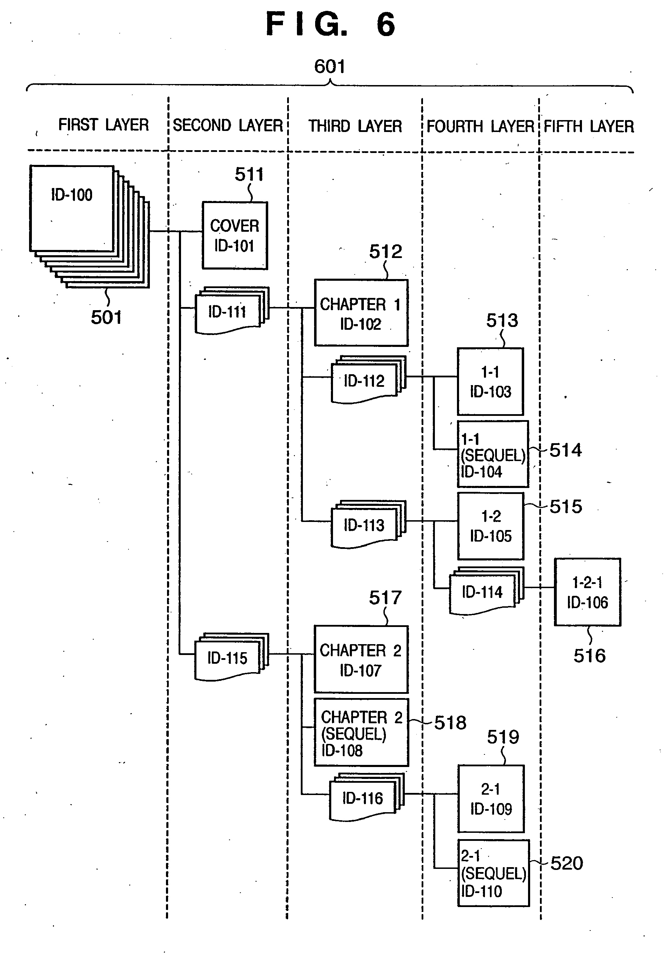

Figs. 5 and 6 show catalog generation examples when the layer attributes explained in Figs. 3 and 4 are actually applied. This catalog is an example of a catalog including a total of 10 pages. Fig. 5 shows an example of an original electronic catalog 501, and Fig. 6 shows an example of a structured electronic catalog.

In Fig. 5, the original electronic catalog 501 includes 10 catalog pages. Respective pages have a configuration in which they are arranged in turn from a first page 511 to a 10th page 520 in the order of pages. The original electronic catalog is a document data file which is delimited by page delimitation information for respective pages, and an annotation can be described in each page as meta information. As annotations, a layer attribute "lower" is assigned to the second and third pages, a layer attribute "equal" is assigned to the fifth page, a layer attribute "lower" is assigned to the sixth page, two layer attributes "upper" are assigned to the seventh page, and a layer attribute "lower" is assigned to the ninth page. That is, this original electronic catalog includes instructions for making the server execute processing for lowering layer positions by one each for the second and third pages, and generate a new folder at the same layer position as the fourth page for the fifth page. Also, this catalog includes instructions for making the server execute processing for lowering the layer position by one for the sixth page, processing for raising the layer position by two for the seventh page, and processing for lowering the layer position by one for the ninth page.

Fig. 6 illustrates the structure of a structured electronic catalog 601 when the original electronic catalog 501 shown in Fig. 5 is uploaded to the server 1.21. Fig. 6 has contents described to allow easy understanding of information of database management shown in Figs. 7A and 7B. However, the information shown in Fig. 7A and 7B logically has the same structure as that shown in Fig. 6. A catalog management table 701 in Fig. 7A represents respective nodes in Fig. 6, and a layer management table 702 in Fig. 7B represents links which connect between nodes in Fig. 6. In this manner, the structured electronic catalog is defined by the tables shown in Figs. 7A and 7B. This does not particularly limit a management method of a file itself, and data may have a data structure which expresses the structure shown in Fig. 6 using, e.g., pointers and the like intact or may have other data structures. In either case, as shown in Fig. 6 and Figs. 7A and 7B, data of a structure that can clarify the dependency by only tracing links is preferably used.

Fig. 6 illustrates the structure of the structured electronic catalog 601 as a whole. In Fig. 6, ID-100 indicates the original electronic catalog 501. The original electronic catalog 501 uploaded from the client is registered in the first layer of the structured electronic catalog. Using the first layer as a root, 10 page data of catalog pages which form the original electronic catalog 501 are divided into predetermined units (page units in this example), and divided files (also called page data) are registered in the structured electronic catalog. In this case, IDs are given to respective page data. In the example of Fig. 6, ID-101 to ID-110 are given to respective page data.

The structuring processing of the original electronic catalog is applied in turn from a first page 511 of the original electronic catalog which is divided into pages. The first page of the original electronic catalog registered in the first layer, i.e., the first page 511 given with ID-101, is selected as a target page, and it is checked if an annotation with a layer attribute (i.e., a description of one of "upper", "lower", and "equal") is given to the target page. Since the first page has no annotation, it is registered in an initial target layer, i.e., a layer immediately below the catalog data (ID-100). The same determination processing is repeated while changing the target page. A second page 512 given with ID-102 is assigned the layer attribute "lower" as an annotation. For this reason, a folder ID-111 is generated according to the rules described in Fig. 3. This folder ID-111 is allocated immediately below the target layer, i.e., as a lower layer of ID-100, and a lower layer of that folder stores the second page (ID-102). Next, a third page 513 given with ID-103 has a layer attribute "lower". For this reason, ID-112 is generated as a new folder immediately below the folder ID-111 that stores ID-102 as the immediately preceding page, and the third page (ID-103) is allocated as a lower layer of ID-112. Since a fourth page 514 given with ID-104 has no layer attribute, it is stored in the same folder as that of ID-103 as the immediately preceding page.

Next, a fifth page 515 given with ID-105 has a layer attribute "equal". For this reason, a new folder ID-113 is generated at the same layer position as the folder (ID-112) to which ID-104 as the immediately preceding page belongs, and the fifth page (ID-105) is stored under this folder (ID-113). The annotation of a sixth page 516 given with ID-106 includes a description "lower". For this reason, a folder ID-114 is generated below the folder ID-113, and the sixth page is stored under that folder. Since a seventh page 517 given with ID-107 has two layer attributes "upper", a new folder ID-115 is generated at a position two layers above the folder ID-114 to which the immediately preceding page (ID-106) belongs (i.e., at the same layer position as the folder ID-111), and the seventh page (ID-107) is stored under the folder ID-115. Since an eighth page 518 given with ID-108 has no layer attribute, it is stored in the same folder as that of the immediately preceding page. A ninth page 519 given with ID-109 has a layer attribute "lower". For this reason, a new folder ID-116 is generated below the folder to which the immediately preceding page (ID-108) belongs, and the ninth page is stored in its lower layer. Since a 10th page 520 given with ID-110 has no layer attribute, it is stored in the same folder as that of the immediately preceding page.

### <Data Structure Example>

Figs. 7A and 7B show examples when the structured electrical catalog illustrated in Fig. 6 is expressed by a database to be actually formed. This database includes a "catalog management table" 701 and "layer management table" 702. These tables are saved in, e.g., the HDD 210. In the catalog management table 701, a "catalog management ID" column 701a registers identifiers of nodes such as pages and folders, and unique values in electronic catalog data are set. Since unique identifiers need only be used, the electronic catalog management program may automatically assign them. A "file" column 701b stores information used to identify the files of the uploaded original electronic catalog file 501' and divided catalog page files 511 to 520. In this column, information used to specify a file corresponding to a catalog management ID such as the file name of the corresponding file, a pointer to the file, an index, or the like is registered. A "file outline" column 701c is not always required since it does not store information indicating the structure of the structured electronic catalog and, hence, its contents are arbitrary. In this example, in order to make files that form the electronic catalog understandable, information in the pages shown in Fig. 5, e.g., chapter numbers, page numbers, and the like are registered. An "annotation" column 701d stores "layer attribute" information assigned to each page. This information is referred to by the electronic catalog management program described later using Fig. 8.

Data registered in the catalog management table 701 in Fig. 7A will be described below. In the catalog management ID column 701a, ID-100 is the identifier of the registered original electronic catalog data. ID-101 to ID-110 are the identifiers given to respective page data of the catalog. ID-111 to ID-116 are the identifiers of folders newly generated according to the layer attributes assigned to ID-101 to ID-110. As described in the file outline column, for example, ID-111 is the folder generated based on the layer attribute "lower" described in the annotation assigned to the catalog page ID-102. Also, ID-112 registers the folder generated in correspondence with the layer attribute "lower" of the catalog page ID-103. Likewise, ID-113, ID-114, ID-115, and ID-116 respectively register the folders generated in correspondence with the layer attributes of ID-105, ID-106, ID-107, and ID-109.

In this way, all of the files of the catalog and divided catalog pages and the folders generated according to the layer attributes are registered in the catalog management table 701. As described above, in the catalog management table 701, the catalog management ID column 701a, file column 701b, and annotation column 701d are indispensable. However, since the file outline column 701c is not always required, it need not be included in the catalog management table 701.

A folder is a branch node indicating that page data and folders in lower layers form a group. In case of this embodiment that manages the inter-node relationship using the layer management table 702, it suffices to identify that it is a folder. For this reason, in the file column 701b of the catalog management table 701 corresponding to a folder, identification information that can identify that it is a folder need only be registered. In Fig. 7, a description <folder> specifies that it is a folder. Of course, a real file, i.e., a folder file may be generated to provide another management information to a folder.

The layer management table 702 in Fig. 7B will be described below. This table 702 has a catalog ID 702a and upper catalog ID 702b as items. Note that further additional information may be registered. The upper catalog ID 702b indicates a layer immediately above the catalog ID 702a, i.e., a node to which the corresponding catalog ID 702a belongs. For example, as can be seen from Fig. 7B, the node ID-101, i.e., the catalog page 511 is allocated immediately below the node ID-100, i.e., the original electronic catalog at the root. In this way, the layer management table 702 describes the dependency among the nodes. In the example of Fig. 7B, the layer management table is sorted in ascending order to have the upper catalog ID 702b as a main key and the catalog ID 702a as a sub key. However, the table need not always be sorted.

The structure shown in, e.g., Fig. 6 can be defined using the aforementioned two tables.

Fig. 8 is a flowchart of the electronic catalog management program which extracts annotation information of layer attributes from respective catalog pages of the uploaded original electronic catalog, and executes layer management (i.e., structuring processing). As for file transfer processing in uploading shown in Figs. 3 and 4, a normal technique such as FTP or the like used in file transfer need only be used, and Fig. 8 starts from the state wherein the original electronic catalog has been uploaded.

Referring to Fig. 8, step S801 corresponds to processing for dividing the file of the original electronic catalog uploaded from the client into page units, and generating page files including document data for respective pages (including corresponding annotations). With this processing, page data are generated for respective catalog pages included in the electronic catalog. The respective page data are generated in a mode that can specify the page order in the original electronic catalog. For example, if each file name includes a page number, the page order can be specified from the file name.

Step S802 corresponds to processing for storing the uploaded original electronic catalog and the respective catalog page files divided in step S801 in locations used in processing according to a file management method. Since the uploaded original electronic catalog and the respective page data divided in step S801 are saved before step S802, step S802 can be omitted if their storage locations must be moved. A file management method may follow an operating system or the like on which the electronic catalog management program runs.

Step S803 corresponds to processing for registering information used to specify the files stored in step S802 (e.g., their locations, file names, and the like; also called file specification information) in the catalog management table 701 described using Fig. 7A. In this step, upon registration, a unique ID is given to each file, and corresponding file specification information is registered in association with that ID. With the processes up to this step, the original electronic catalog and file information associated with the catalog pages divided from the original electronic catalog are stored in an electronic catalog database. In step S804 and subsequent steps, processing associated with layer attributes assigned as annotations to the pages of the electronic catalog is executed.

Step S804 corresponds to initialization processing associated with a loop for executing processing of a layer attribute of each page of the electronic catalog. In this initialization processing, the number of page data (10 in the example of Fig. 6) is set as the catalog page count N, and "1" is set as an initial value of a loop variable i. The variable i indicates the page number of the target page. Also, the first layer is set as parent layer information of the immediately preceding page of the first page. That is, the ID of the original electronic catalog allocated in the first layer is set as an initial value of a target folder variable P. In the structured electronic catalog, since no folder is allocated in the first layer as a root, the ID of the original electronic catalog is exceptionally set for the root node. Respective variables are assured on the RAM 209. In this way, the variables are initialized to prepare for the subsequent loop processing.

Step S805 is the first processing of the loop processing, and it is checked with reference to the variable i if an annotation of a layer attribute is assigned to the i-th catalog page. This checking processing may be done with reference to the electronic catalog 501. However, in this example, this processing is done with reference to the catalog management table 701. In the catalog management table 701, since the original electronic catalog is registered in the 0 th row, and information such as the ID or the like that specifies each page file is registered in the page order in turn from the first row, a row corresponding to the i-th page can be referred to by the variable i which has "1" as an initial value. If the annotation of the layer attribute is assigned to the i-th page, the flow advances to step S806. Otherwise, the flow jumps to step S813.

In step S806, branch processing is executed in accordance with the type of the assigned layer attribute. If the layer attribute "lower" is assigned, the flow advances to step S807; if the layer attribute "upper" or "equal" is assigned, the flow advances to step S809.

In step S807, if a plurality of descriptions of the layer attribute "lower" are found, the number of descriptions is counted, and folders as many as the number of descriptions of "lower" are additionally registered in the catalog management table 701 under the folder that stores the immediately preceding page, i.e., the folder (i.e., target folder) having the ID indicated by the target folder variable P. Of course, that ID is unique. Then, the layer information of the layered folders is registered in the layer management table 702.

For this purpose, for example, one description "lower" included in the annotation is read out, and a new folder is registered in the catalog management table 701. The ID of that new folder is registered in the catalog ID column 702a of the layer management table 702, and the ID of the target folder, i.e., the contents of the target folder variable P, are registered in the upper catalog ID column 702b. The ID of the newly registered folder is saved as a new value of the target folder variable P. If there are a plurality of descriptions of "lower", the sequence from reading out one description "lower" until registration of a folder in respective tables is repeated as many as the number of descriptions, thus implementing step S807. Of course, if the number of descriptions of "lower" is known, the sequence for reading out it in each case can be omitted.

In step S808, the folder which is allocated at the lowermost position of those which are generated in step S807 is set as a parent layer. That is, the ID of the newly generated folder of the lowermost layer is set in the target folder variable P. However, if the ID of the newly generated folder is set'as the value of the target folder variable P in step S807, step S808 need not be executed anew.

On the other hand, if it is determined in step S806 that the annotation has either the layer attribute "upper" or "equal", it is checked in step S809 if the layer of a new folder to be generated corresponds to the first layer (or above it), i.e., the layer of the original electronic catalog. When the layer attribute is "upper", the new folder to be checked is the uppermost one of new folders to be generated as well as a case wherein a plurality of layer attributes "upper" are designated. Also, when the layer attribute is "equal", the folder to be checked is a new folder to be generated. In this checking processing, for example, if the layer attribute is "upper", the catalog ID column 702a of the layer management table 702 is searched for the ID of the target folder. If that ID is found, the corresponding upper catalog ID is read. This processing for searching the catalog ID column 702a of the layer management table 702 for the ID of a given node, and acquiring the upper catalog ID corresponding to that ID will be simply referred to as "tracing back a link". When links of n layers are to be traced back, the processing for "tracing back a link" need only be repeated n times using the acquired upper catalog ID as the ID of the given node. In this manner, "tracing back a link" is repeated as many as the number of layers corresponding to the number of descriptions "upper" with reference to the target folder. If the search processing of the layer management table 702 has failed during "tracing back a link", or if the value of the finally obtained upper catalog ID matches the ID of the original electronic catalog located in the first layer, the new folder is to'be generated above the first layer, and the checking result in step S809 becomes YES. Otherwise, the checking result is NO.

On the other hand, in case of "equal", since a new folder is to be generated in the same layer as that of the target folder, it is checked if the value of the target folder variable P matches the ID of the original electronic catalog, and if they do not match, the checking result is NO.

If it is determined as a result of checking in step S809 that a new folder corresponds to the first layer (or a layer above it), the flow advances to step S812. On the other hand, if a new folder does not correspond to the first layer, the flow advances to step S810. Note that the difference between the flows of steps S810 and S812 lies in that as to whether or not to generate a new folder.

In step S810, a new folder is registered in the catalog management table 701 and layer management table 702. For example, in case of the layer attribute "upper", the ID of the target folder is newly registered in the catalog ID column 702a of the layer management table 702 first. Then, the aforementioned processing for "tracing back a link" is repeated with reference to the target folder as many as the number of layers corresponding to a value obtained by adding 1 to the number of descriptions of "upper" (for example, two layers if the number of descriptions of "upper" is 1). The value of the upper catalog ID obtained as a result of this processing indicates a parent folder of the new folder. Therefore, the obtained value of the upper catalog ID is registered as that of the upper catalog ID column 702b corresponding to the newly registered value of the catalog ID column 702a.

On the other hand, in case of the layer attribute "equal", the ID of the target folder is newly registered in the catalog ID column 702a of the layer management table 702. Then, the aforementioned processing for "tracing back a link" is executed for one layer with reference to the target folder. The value of the upper catalog ID obtained as a result of this processing indicates a parent folder of the new folder. Therefore, the obtained value of the upper catalog ID is registered as that of the upper catalog ID column 702b corresponding to the newly registered value of the catalog ID column 702a.

In step S811, the generated folder is set as the parent layer of the i-th catalog page as the target page. That is, the ID of the new folder generated in step S810 is set as the value of the target folder variable P. The flow then advances to step S813.

On the other hand, in step S812 since the layer of a new folder to be generated is located in the same first layer as the catalog or in a layer above it, no folder is generated. In step S812, the original electronic catalog as the first layer is set as the parent layer of the target page (i.e., the ID of the original electronic catalog is set as the target folder variable P), and the flow then advances to step S813.

Step S813 corresponds to processing for registering the layer information of the i-th catalog page as the target page in the layer management table 702. For example, the ID of the target page i is registered in the catalog ID column 702a of the layer management table 702, and the ID of the target folder (i.e., the contents of the target folder variable P) is registered in the upper catalog ID column 702b corresponding to the registered ID.

As routes to step S813, there are four routes, i.e., a route if "NO" in step S805, and those via steps S808, S811, and S812. In any of these routes, the i-th catalog page and its parent layer information are set in the layer management table 702 in association with each other. Conversely, the target i-th catalog page is registered under the folder or original electronic catalog designated as the parent layer.

Then, step S814 corresponds to branch processing for determining if the loop variable indicates that all pages have been processed. If all pages have been processed, the processing ends. More specifically, if the variable i becomes equal to or larger than the catalog page count N, the structuring processing for all pages is complete. If pages to be processed still remain, the loop variable is incremented by one to select the next page as the target page in step S815, and the flow returns to step S805.

As described above, using the electronic catalog management system according to this embodiment, when the client uploads a structured document to which annotations of layer attributes are assigned, the server can register data of the uploaded electronic catalog'and catalog pages, and can hierarchically and structurally reconfigure the electronic catalog based on the annotations of the layer attributes assigned to the catalog pages, thus automatically implementing layer management.

According to this embodiment, data having no layered structure, e.g., a document can be managed as data with a designated structure, e.g., a document. For this reason, data with a desired structure, e.g., a document can be managed and provided, and productivity drop, resource use efficiency drop, and possibility of malpractices due to structuring can be prevented. Furthermore, since the structure can be designated based on the annotations assigned to a document, data having an existing data format can be used as data having no layered structure serving as an input. Moreover, in this embodiment, a format which does not depend on a computer environment is used as the data format having no layered structure. Hence, computers having different environments (e.g., different operating systems) can handle data having an identical structure, e.g., a document, as compatible data.

Note that the catalog management program of this embodiment cannot uniquely express structured document data shown in Fig. 6 based on original document data that describes relative layers to which respective pages belong in those pages, as shown in Fig. 5. The structure which can be described by the layer attributes of this embodiment is limited to:
(1) a structure which includes a page in an identical layer, which belongs to the same parent folder as that of a given folder after that folder; and
(2) a structure which includes a page which does not belong to a folder to which a given page directly belongs and is located in a layer lower than the given page after that page.

If more complicated descriptions of the layer attributes are adopted, these limitations can be removed. However, the aforementioned limitations do not pose any problems upon describing the structure of a normal document. This is due to the essential nature of a document that the terminal end of a lower element normally matches that of an upper element to which that element belongs in case of papers to be combined in a document form such as books, booklets, and the like. In this embodiment, by positively abandoning a method of describing an unnecessary structure for a document in consideration of such nature of a document, expression of a document structure by a very simple description by combining three descriptions "upper", "lower", and "equal" can be realized. Since the server can structure a document by simple operations corresponding to these three different descriptions, simple processing, i.e., speeding up of processing, and a decrease in malpractice on the program can be realized.

### <Editing tool>

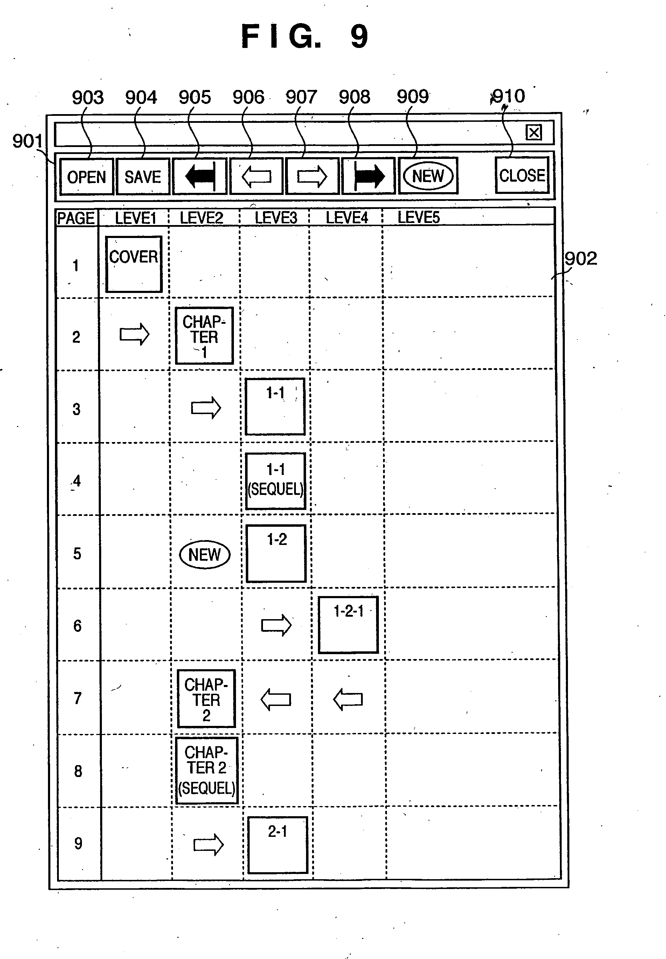

According to the description of Fig. 5, the user will memorize the configuration contents or take a note of them on something. However, in practice, if the user uses a tool that can edit in a format that displays a page layout and chapter configuration, he or she can visually and easily make operations. The editing tool for an electronic catalog to be uploaded to the catalog server will be explained in reference to Fig. 9.

Fig. 9 shows an example of an edit tool which appends annotation information used to manipulate layer information to document data. Note that the example of this edit tool is not particularly limited, and it shows that it is efficient if such operation can be made.

In Fig. 9, reference numeral 901 denotes an application. This application includes a tool bar below a title bar, and an edit area 902 below the tool bar. In the edit area 902, the ordinate plots pages of a target file, and the abscissa plots layers. Also, assume that any one of rows is selected as an object to be edited. This example indicates an implementation example of Fig. 5 using an edit tool. For example, in Fig. 9, "cover" as the first page indicates the first layer (Level1), and "chapter 1" as the next second page indicates the second layer. An arrow described in Level1 in the row of "chapter 1" indicates a designation of "lower", and this becomes actual annotation information. In other words, "lower" appended as the annotation information to a page is visualized as a right-pointing arrow. Similarly, "upper" appended as the annotation information to a page is visualized as a left-pointing arrow.

Likewise, an arrow described in left side of "1-1" (i.e., page 3) indicates another designation of "lower". According this designation, page 3 is placed in the immediately lower level of "chapter 1". Note that "New" in a circle in Level2 of "1-2" as the fifth page indicates "equal" attached as the annotation information to the fifth page. A page designated by "equal" is placed in the same level as an immediately prior page.

The sixth page is designated to be placed in a further lower level by a right-pointing arrow. The seventh page is placed in two level upper layer than the sixth page. Tow left-pointing arrows indicates double "upper":

The operations will be described below using buttons in the tool bar.

A button 903 is used to execute processing for importing target input document data having no structure. As for designation of a file, a general method can be used, and a detailed description thereof will be omitted. Using this button 903, a target file can be imported.

A button 904 is used to execute processing for outputting output document data having a structure to which annotation information is assigned in consideration of the edit result. As for an output method, a general method can also be used, and a detailed description thereof will be omitted.

A button 905 is used to execute processing for raising the selected target'page and pages following the target page by one layer. In this case, processing is done to include pages in the layer of the target page. When a user press the button 905 once, a string (that is indicating layer attribute) "upper" is appended to the selected target page as the annotation information. Then, on the screen shown in Fig. 9, an object indicating the selected target page is shifted to the left and a left-pointed arrow is displayed in the right side of the object indicating the selected page. The objects indicating the following pages and symbols like arrows appended to the pages are also shifted in a similar fashion as the target page. However, a left-pointed arrow is not displayed for the following pages because the string "upper" is appended to the target_page only.

A button 906 is used to execute processing for raising only the selected page by one layer unlike the button 905. For example, when the button 905 is designated while "chapter 1" in the second row is selected, "chapter 1" as.the target row and pages of the third to sixth pages are raised by one layer. However, the button 906 is used to execute processing to raise only "chapter 1" by one layer. When the button 906 is pressed once, the string "upper" is appended to the selected target page and the string "lower" is appended to the next page of the target page as the annotation information. Then, on the screen shown in Fig. 9, only an object indicating the selected target page is shifted to the left and a left-pointed arrow is displayed in the right side of the object indicating the selected page. The objects indicating the following pages of the target page are not shifted. However, because the string "lower" is appended to the next page of the target page, the right-pointed arrow indicating "lower" is displayed in the left side of the object indicating the next page. If a right-pointed arrow is already displayed, a right -pointed arrow is additionally display.

A button 907 is used to execute processing for lowering only the target row by one layer. When the button 907 is pressed once, the string "lower" is appended to the selected target page and the string "upper" is appended to the next page of the target page as the annotation information. Then, on the screen shown in Fig. 9, only an object indicating the selected target page is shifted to the right and a right-pointed arrow is displayed in the left side of the object indicating the selected page. The objects indicating the following pages of the target page are not shifted. Because the string "upper" is appended to the next page of the target page, the left-pointed arrow indicating "upper" is displayed in the right side of the object indicating the next page. If a left-pointed arrow is already displayed, a left-pointed arrow is additionally display.

Likewise, a button 908 is used to execute processing for lowering all of a page in the target row and those located below the target row by one layer. When a user press the button 908 once, a string "lower" is appended to the selected target page as the annotation information. Then, on the screen shown in Fig. 9, an object indicating the selected target page is shifted to the right and a right-pointed arrow is displayed in the left side of the object indicating the selected page. The objects indicating the following pages and symbols like arrows appended to the following pages of the target page are also shifted in a similar fashion as the target page. However, a right-pointed arrow is not displayed for the following pages because the string "lower" is appended to the target page only.

A button 909 is designated to set the target row at an "equal" position. For example, "1-2" in the fifth row indicates an example upon depression of this "equal" button. When the button 909 is pressed, the string "equal" is appended to the selected target page and an object indicating "equal" is displayed in a screen as shown in Fig. 9.

A button 910 is used to end this application. When the button 910 is pressed, the document (i.e., an electronic catalog) data edited by this editing application is stored to a non-volatile storage. The stored data is uploaded to the server 121 and converted into a structured electronic catalog data by performing the process shown in Fig. 8.

As described above, when the description using Fig. 9 is used, visual edit processing can be made upon assigning annotation information of the,present invention, thus allowing further efficient edit processing.

### <Other Embodiments>

Note that the present invention can be applied to an apparatus comprising a single device or to system constituted by a plurality of devices.

Furthermore, the invention can be implemented by supplying a software program, which implements the functions of the foregoing embodiments, directly or indirectly to a system or apparatus, reading the supplied program code with a computer of the system or apparatus, and then executing the program code. In this case, so long as the system or apparatus has the functions of the program, the mode of implementation need not rely upon a program.

Accordingly, since the functions of the present invention are implemented by computer, the program code itself installed in the computer also implements the present invention. In other words, the claims of the present invention also cover a computer program for the purpose of implementing the functions of the present invention.

In this case, so long as the system or apparatus has the functions of the program, the program may be executed in any form, e.g., as object code, a program executed by an interpreter, or scrip data supplied to an operating system.

Examples of storage media that can be used for supplying the program are a floppy disk, a hard disk, an optical disk, a magneto-optical disk, a CD-ROM, a CD-R, a CD-RW, a magnetic tape, a non-volatile type memory card, a ROM, and a DVD (DVD-ROM and a DVD-R).

As for the method of supplying the program, a client computer can be connected to a website on the Internet using a browser of the client computer, and the computer program of the present invention or an automatically-installable compressed file of the program can be downloaded to a recording medium such as a hard disk. Further, the program of the present invention can be supplied by dividing the program code constituting the program into a plurality of files and downloading the files from different websites. In other words, a WWW (World Wide Web) server that downloads, to multiple users, the program files that implement the functions of the present invention by computer is also covered by the claims of the present invention.

Further, it is also possible to encrypt and store the program of the present invention on a storage medium such as a CD-ROM, distribute the storage medium to users, allow users who meet certain requirements to download decryption key information from a website via the Internet, and allow these users to decrypt the encrypted program by using the key information, whereby the program is installed in the user computer.

Furthermore, besides the case where the aforesaid functions according to the embodiments are implemented by executing the read program by computer, an operating system or the like running on the computer may perform all or a part of the actual processing so that the functions of the foregoing embodiments can be implemented by this processing.

Furthermore, after the program read from the storage medium is written to a function expansion board inserted into the computer or to a memory provided in a function expansion unit connected to the computer, a CPU or the like mounted on the function expansion board or function expansion unit performs all or a part of the actual processing so that the functions of the foregoing embodiments can be implemented by this processing.

As many apparently widely different embodiments of the present invention can be made without departing from the spirit and scope thereof, it is to be understood that the invention is not limited to the specific embodiments thereof except as defined in the appended claims.

## Claims

1. A document processing apparatus (121) for converting input document data (501) having no structure into output document data (601) having a structure, **characterized by** comprising:
layer generation means (S807; S810) for selecting one of predetermined constitutional units of the input document data as a target constitutional unit; generating new layer information of the output'document data based on layer specification information included in document data of the target constitutional unit, and setting the layer information as a new target layer; and
registration means (S813) for registering the target constitutional unit of the input document data as a constitutional unit which belongs to the target layer of the output document data, and
in that said layer generation means and said registration means perform conversion into the output document data while sequentially selecting first to last constitutional units as a target constitutional unit for the input document data.

2. The apparatus according to claim 1, **characterized in that** the input document data can describe annotation information for each constitutional unit of the input document data, and said layer generation means interprets information written in the annotation information in a predetermined format as the layer specification information with reference to the annotation information described for each constitutional unit of the input document data.

3. The apparatus according to claim 1 or 2, **characterized in that** the output document data has a tree structure, the layer specification information specifies a layer associated with the new layer information to be generated by the number of layers relative to a current target layer, and said layer generation means generates the new layer information to be generated according to the tree structure.

4. The apparatus according to any one of claims 1 to 3, **characterized in that** when the target constitutional unit does not include any layer specification information, said layer generation means does not generate any new layer information, and does not change the target layer.

5. The apparatus according to any one of claims 1 to 4, **characterized by** further comprising connection means for connecting to a computer network, and in that the input document data is input from the computer network, and the output document data is provided to the computer network.

6. A document processing system **characterized by** comprising:
a client computer; and
a document processing apparatus of claim 5, which' functions as a server connected to said client computer via a computer network.

7. A document processing method for converting input document data having no structure into output document data having a structure, **characterized by** comprising:
a layer generation step of selecting one of predetermined constitutional units of the input document data as a target constitutional unit, generating new layer information of the output document data based on layer specification information included in document data of the target constitutional unit, and setting the layer information as a new target layer; and
a registration step of registering the target constitutional unit of the input document data as a constitutional unit which belongs to the target layer of the output document data, and
in that conversion into the output document data is performed in the layer generation step and the registration step while sequentially selecting first to last constitutional units as a target constitutional unit for the input document data.

8. A computer program **characterized by** making a computer to implement a method of claim 7 when said computer program is executed by the computer.

9. A computer-readable recording medium **characterized by** recording a computer program of claim 8.

10. A data conversion apparatus for converting sequential data in which records are allocated sequentially into structured data in which the records are hierarchically allocated, **characterized by** comprising:
interpretation means for interpreting contents of a predetermined field in a target record of the sequential data; and
registration means for, when said interpretation means interprets that the contents of the predetermined field indicate a layer of the target record, generating a layer indicated by the field, and registering the target record in the structured data as a record which belongs to the generated layer.

11. A catalog server for providing catalog data with a tree structure in which respective pages are allocated as leaf nodes of the tree structure onto a network, **characterized by** comprising:
interpretation means for selecting each page of input document data in which pages are sequentially allocated as a target page in turn, and interpreting annotation information which can be described for each target page;
generation means for, when said interpretation means interprets that the annotation information is specification information indicating that the target page belongs to a branch node different from a current branch node, generating catalog data by generating a new branch node of a layer specified by the specification information, and registering the target page as a leaf node that belongs to the new branch node; and
means for transmitting all or some of the catalog data generated by said generation means in response to a request from the network.

12. A document processing apparatus **characterized by** comprising:
appending means for appending annotation information to a document; and
setting means for setting layers of the document on the basis of the annotation information appended by said appending means.

13. A document processing apparatus **characterized by** comprising:
input means for inputting a document appended with annotation information; and
setting means for setting layers of a document on the basis of the annotation information of the document input by said input means.

14. The apparatus according to claim 12 or 13, **characterized in that** the annotation information includes an instruction to set in an upper layer of a previous document; an instruction to set in a lower layer of a previous document, and an instruction to set in a layer identical to a previous document.

15. A document processing method **characterized by** comprising:
an appending step of appending annotation information to a document; and
a setting step of setting layers of the document on the basis of the annotation information appended in the appended step.

16. A document processing method **characterized by** comprising:
an input step of inputting a document appended with annotation information; and
a setting step of setting layers of a document on the basis of the annotation information of the document input in the input step.

17. The method according to claim 15 or 16, **characterized in that** the annotation information includes an instruction to set in an upper layer of a previous document, an instruction to set in a lower layer of a previous document, and an instruction to set in a layer identical to a previous document.

18. A computer-readable program recorded in a computer-readable recording medium, **characterized by** executing:
an appending step of appending annotation information to a document; and
a setting step of setting layers of the document on the basis of the annotation information appended in the appended step.

19. A computer-readable program recorded in a computer-readable recording medium, **characterized by** executing:
an input step of inputting a document appended with annotation information; and
a setting step of setting layers of a document on the basis of the annotation information of the document input in the input step.

20. The program according to claim 18 or 19, **characterized in that** the annotation information includes an instruction to set in an upper layer of a previous document, an instruction to set in a lower layer of a previous document, and an instruction to set in a layer identical to a previous document.
